(19) **Europäisches Patentamt / European Patent Office / Office européen des brevets**

(11) **EP 3 425 197 B1**

(12) **EUROPÄISCHE PATENTSCHRIFT**

(45) Veröffentlichungstag und Bekanntmachung des Hinweises auf die Patenterteilung:
**14.04.2021 Patentblatt 2021/15**

(51) Int Cl.:
*F03D 7/02* (2006.01)  *F03D 7/04* (2006.01)

(21) Anmeldenummer: **18181895.6**

(22) Anmeldetag: **05.07.2018**

(54) **LEISTUNGSREDUKTION BEI MEHREREN WINDENERGIEANLAGEN IN EINEM WINDPARK**

POWER REDUCTION IN MULTIPLE WIND ENERGY ASSEMBLIES IN A WIND FARM

RÉDUCTION DE LA PUISSANCE D'UNE PLURALITÉ D'ÉOLIENNES DANS UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2017 DE 102017006452**

(43) Veröffentlichungstag der Anmeldung:
**09.01.2019 Patentblatt 2019/02**

(73) Patentinhaber: **Siemens Gamesa Renewable Energy Service GmbH 22297 Hamburg (DE)**

(72) Erfinder: **Geisler, Jens 24768 Rendsburg (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**US-A1- 2008 150 283    US-A1- 2011 175 353 US-A1- 2014 103 652**

EP 3 425 197 B1

**Beschreibung**

Die Erfindung betrifft ein Verfahren zur Leistungsreduktion in einem Windpark. Der Windpark umfasst einen Parkmaster und mehrere Windenergieanlagen, die elektrische Leistung erzeugen und abgegeben. Außer einem Normalbetrieb ist ein leistungsreduzierter Betrieb möglich, in dem am Parkmaster ein Signal für eine Leistungsreduktion des Windparks angelegt wird und auf dieser Basis die Windenergieanlagen ihre Leistungserzeugung drosseln.

Mit dem Ausbau von erneuerbaren Quellen werden auch Windparks verstärkt dazu herangezogen, ihren Beitrag zur Netzstabilität zu leisten. So leisten Windparks ihren Beitrag beispielsweise durch Regelung der Leistungsabgabe, auch im Hinblick auf die Abgabe von Wirkleistung. Hierbei werden die an die Windparks gestellten Anforderungen hinsichtlich Regelgüte immer höher. Insbesondere wird eine höhere Regelgeschwindigkeit bei Veränderungen der Leistungsanforderung verlangt.

Wenn ein Windpark als Ganzes weniger Leistung abgeben soll, muss die Leistungsabgabe der einzelnen Windenergieanlagen reduziert werden. Bisher war dazu bekannt, neue Sollwertvorgaben für die einzelnen Windenergieanlagen zu bestimmen und diese an sie zu übermitteln. Durch die individuelle Vorgabe ist dieses Verfahren bei dynamisch veränderlichen Vorgaben mit häufig aktualisierten Vorgaben verhältnismäßig langsam und eignet sich daher nicht für hohe Regelgeschwindigkeiten. Ferner ist es bekannt, einen gemeinsamen Sammelvorgabewert zu bestimmen und an die Windenergieanlagen zu übermitteln. Dies bietet zwar den Vorteil schneller Übermittlung, kann aber insbesondere zu Problemen führen bei Windenergieanlagen mit schwierigen Windbedingungen (zum Beispiel wenig Wind). Diese können häufig veränderten Vorgaben zur Leistungsabgabe nicht voll folgen (mangels ausreichendem Wind). Dies bewirkt eine erhebliche Verschlechterung des Gesamtregelverhaltens des Windparks.

Aus der EP 2 028 368 B1 ist ein weiteres Verfahren bekannt. Hierbei wird die von den jeweiligen Windbedingungen abhängige verfügbare Leistung für jede Windenergieanlage bestimmt. Abhängig von der externen Vorgabe für den Windpark als Ganzes wird dann jede Windenergieanlage prozentual in ihrer Leistungsabgabe reduziert. Bei einer Leistungsreduktion können so problemlos sämtliche Windenergieanlagen folgen; bei einer Leistungsanhebung können jedoch gegebenenfalls nicht alle Windenergieanlagen folgen. Dies bedeutet, dass die Dynamik des Regelverhaltens bei Leistungsanhebung nicht optimal ist US20110175353 zeigt ein weiteres Beispiel aus dem Stand der Technik.

Der Erfindung liegt die Aufgabe zu Grunde, einen verbesserten Windpark bzw. Betriebsverfahren zu schaffen, das bei weiterhin hoher Regelgüte eine größere Regelgeschwindigkeit aufweist.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Betreiben eines Windparks, der einen Parkmaster und mehrere Windenergieanlagen mit je einer Steuerung zur Erzeugung elektrischer Leistung umfasst, wobei der Parkmaster die Leistungsabgabe der Windenergieanlagen vorgibt, und der Windpark in einem Normalbetrieb und einem leistungsreduzierten Drosselbetrieb betrieben werden kann, wobei im Drosselbetrieb am Parkmaster ein Signal für eine Leistungsreduktion des Windparks $\Delta P_{soll,Park}$ angelegt wird und auf dieser Basis teilnehmende Windenergieanlagen ihre Leistungserzeugung drosseln, ist erfindungsgemäß ein Festlegen einer individuellen Soll-Leistungsreduktion $P_{soll(i)}$ für jede teilnehmende Windenergieanlage vorgesehen, mit den Schritten: Bestimmen einer verfügbaren Leistung $P_{avail(i)}$ für jede der teilnehmenden Windenergieanlagen und Verringern dieser verfügbaren Leistung um einen Reduktionsanteil $\Delta P_i$; ein Bestimmen der Reduktionsanteile $\Delta P_i$ durch ein Optimierungsverfahren mit der Optimierungsbedingung $T_{regain,opt} = T_{regain}(\Delta P_i, x_i)$ für alle teilnehmenden Windenergieanlagen; und Wiederholen bis das Optimierungsverfahren ein voreinstellbares Abbruchkriterium erreicht.

Nachfolgend seien zuerst einige verwendete Begriffe erläutert:
Unter "verfügbare Leistung" wird diejenige Leistung verstanden, welche eine Windenergieanlage bei den aktuell vorherrschenden (Wind-)Bedingungen maximal abgeben kann.

Unter einer "Steigerungszeit" wird diejenige Zeitdauer verstanden, welche die Windenergieanlage zur Steigerung ihrer Leistungsabgabe von einem ersten niedrigeren Wert auf einen zweiten höheren Wert, insbesondere einen ungedrosselten Leistungswert, benötigt.

Die Erfindung fußt auf der Erkenntnis, dass sich die dynamische Regelgüte des gesamten Windparks im Rahmen eines Optimierungsverfahrens durch Berücksichtigung der Leistungssteigerungsfähigkeit der einzelnen Windenergieanlagen deutlich steigern lässt. Mit der Erfindung ist es möglich, ein dynamisch hochwertiges Regelverhalten des Windparks nicht nur bei Leistungsreduktion, sondern nun auch bei Leistungssteigerung zu erreichen. Durch die Berücksichtigung der individuellen Leistungssteigerungsfähigkeit der einzelnen Windenergieanlagen schafft es die Erfindung, dass die Windenergieanlagen synchron ihre jeweils maximale Leistungsabgabe erreichen. Negative Begleiterscheinungen, wie im Stand der Technik teilweise aufgetretene Überschwinger oder langsame asymptotische Annäherungen werden damit wirkungsvoll vermieden.

Weiter hat die Erfindung erkannt, dass gegebenenfalls ein unvollständiges Durchführen des Optimierungsverfahrens von Vorteil sein kann. Dies bietet den Vorzug einer schnelleren Verarbeitung. Damit kann eine verbesserte Echtzeitfähigkeit erreicht werden. Dies gilt insbesondere dann, wenn das unvollständige Durchführen über eine festgelegte Dauer erfolgt. Damit ist sichergestellt, dass rechtzeitig für den nächsten Verarbeitungsschritt neue Optimierungsergebnisse bereit stehen.

Mit Vorteil ist die festgelegte Dauer eine Zeitdauer. Dies bietet den Vorzug, dass auf diese Weise - innerhalb definierter Grenzen - eine Echtzeitfähigkeit erreicht werden kann. Es kann aber auch vorgesehen sein, dass die Dauer bestimmt ist durch eine Anzahl von Wiederholungen des Optimierungsverfahrens.

Zweckmäßigerweise wird das Optimierungsverfahren inkrementell durchgeführt, und zwar ausgehend von den Ergebnissen des davor zuletzt durchgeführten Optimierungslaufs (auch Warmstart genannt). Somit muss nicht bei jedem Lauf die vollständige Berechnung durchgeführt werden. Es genügt vielmehr, dass Optimierungsverfahren nur teilweise zu durchlaufen (beispielsweise über eine fest vorgegebene Anzahl von Iterationsschritten). Dabei wird dann in einem folgenden Lauf des Optimierungsverfahrens das Zwischenergebnis des vorangegangenen Laufs verwendet. Somit wird die Rechenintensität im einzelnen Lauf erheblich reduziert und dennoch letztlich über mehrere Läufe hinweg Konvergenz erreicht.

Insbesondere bei unvollständiger Optimierung hat es sich bewährt, die Erfüllung einer Nebenbedingung zu erzwingen. So kann als Nebenbedingung aufgestellt sein, dass die Summe der Leistungsreduktion an den Windenergieanlagen der angeforderten Leistungsreduktion des Windparks insgesamt entsprechen soll ($\sum \Delta P_i = \Delta P_{soll,Park}$), und dies wird als Nebenbedingung im Optimierungsverfahren berücksichtigt und gegebenenfalls erzwungen. Je nach Optimierungsalgorithmus werden Nebenbedingungen jedoch auch erst bei Erreichen der Konvergenz erfüllt. Dann muss nach einem frühzeitigen Abbruch eine geeignete Maßnahme ergriffen werden, um die Nebenbedingung trotzdem zu erzwingen. Dies kann beispielsweise mittels einer Skalierung durch einen Korrekturfaktor erfolgen.

Mit Vorteil kann das Verfahren weiter verbessert werden durch Einbeziehen einer einzuhaltenden Mindestleistung der Windenergieanlagen als weitere Nebenbedingung. Damit ist sichergestellt, dass jede Windenergieanlage eine gewisse Wirkleistung erbringt, und sie zum anderen auch mit Wirkleistung belastet wird. Eine vollständige Entlastung des Windrotors wird so vermieden, wodurch der Gefahr von Instabilitäten im Antriebsstrang der Windenergieanlage durch zu weitgehende Entlastung wirksam entgegengewirkt wird.

Weiter kann vorgesehen sein, einen Teil der Windenergieanlagen des Windparks auszuschließen, insbesondere solche mit einer verfügbaren Leistung unterhalb einer einstellbaren Schwelle. Hierdurch wird verhindert, dass Windenergieanlagen mit einer zu geringen verfügbaren Leistung das Optimierungsverfahren hemmen.

Mit Vorteil ist vorgesehen, dass eine Funktion zur Abbildung der Steigerungszeit der teilnehmenden Windenergieanlagen hinterlegt wird, vorzugsweise als Polynom. Hierdurch kann auf analytische Weise die Verzögerungszeit der jeweiligen Windenergieanlagen direkt numerisch berechnet werden. Es kann aber auch vorgesehen sein, die Funktion für die Steigerungszeit in einem Kennfeld, vorzugsweise einem mehrdimensionalen Kennfeld, zu hinterlegen. Dies bietet den Vorteil hoher Geschwindigkeit.

Ferner kann vorgegeben sein, das Optimierungsverfahren zumindest teilweise dezentral auszuführen. Damit können vor Ort vorgehaltene Daten der Windenergieanlagen effizienter genutzt werden.

Besonders zweckmäßig ist die Verwendung eines nichtlinearen Optimierungsverfahrens, wie z.B. des Newton-Verfahrens. Hiermit kann das Optimierungsverfahren besser auf die Eigenheiten der Windenergieanlagen abgestimmt sein. Regelungsgüte sowie Optimierungsgeschwindigkeit können damit verbessert werden.

Die Erfindung bezieht sich ferner auf einen entsprechend betriebenen Windpark. Zur näheren Erläuterung wird auf vorstehende Beschreibung verwiesen.

Nachfolgend wird die Erfindung unter Bezugnahme auf die beigefügte Zeichnung anhand eines Ausführungsbeispiels näher erläutert. Es zeigen:

Fig. 1    eine Übersichtsdarstellung eines Windparks gemäß einem Ausführungsbeispiel der Erfindung;

Fig. 2    eine schematische Darstellung eines Leistungsreglers im Parkmaster;

Fig. 3    ein Ablaufdiagramm;

Fig. 4    Diagramme darstellend das Leistungsverhalten des Windparks und der Windenergieanlagen; und

Fig. 5    ein Vergleich mit dem Stand der Technik.

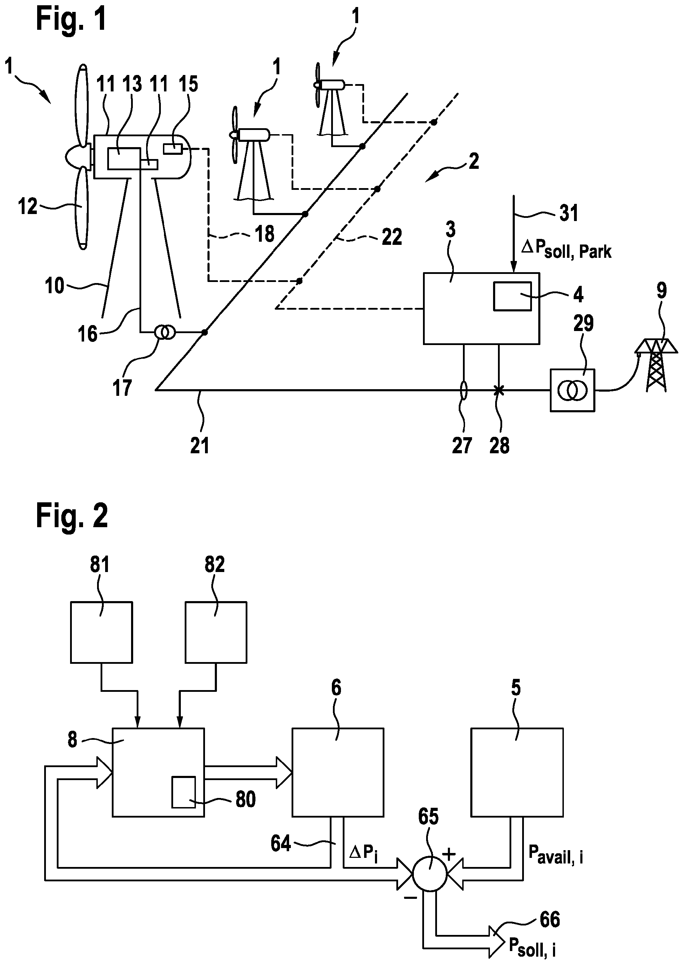

Figur 1 zeigt einen Windpark gemäß einem Ausführungsbeispiel der Erfindung. Er umfasst eine Mehrzahl von Windenergieanlagen 1, die über ein parkinternes Netz 2 miteinander verbunden sind, sowie einen Parkmaster 3.

Die Windenergieanlagen 1 sind im dargestellten Ausführungsbeispiel im Wesentlichen gleich aufgebaut. Sie weisen jeweils einen Turm 10 auf, an dessen oberen Ende eine Gondel 11 in Azimutrichtung schwenkbar angeordnet ist. An einer Stirnseite der Gondel 11 ist ein Windrotor 12 drehbeweglich angeordnet, der über eine (nicht dargestellte) Rotorwelle einen Generator 13 antreibt. Der Generator 13 wirkt mit einem Umrichter 14 zusammen zur Erzeugung elektrischer Energie, die über eine Anschlussleitung 16 mit einem daran angeordneten Anlagentransformator 17 an ein Sammelnetz 21 des parkinternen Netzes 2 abgegeben wird. Der Betrieb der Windenergieanlage 1 ist gesteuert von jeweils einer Betriebssteuerung 15, die ebenfalls in der Gondel 11 angeordnet ist. Die Betriebssteuerung 15 ist über eine Signalleitung 18 an ein Signalnetz 22 des parkinternen Netzes 2 angeschlossen.

Ferner an das Signalnetz 22 angeschlossen ist der Parkmaster 3. Er dient zur übergeordneten Führung der Windenergieanlagen 1 und ist zu diesem Zweck über das Signalnetz 22 mit den Betriebssteuerung 15 der Windenergieanlagen 1 verbunden. Der Parkmaster 3 weist einen Führungsanschluss 31 auf, an den Vorgaben anlegbar sind (beispielsweise eine von dem Windpark als Ganzes verlangte Leistungsreduktion $P_{soll,park}$ oder $\Delta P_{son,park}$). Diese können von einer übergeordneten Instanz (wie dem Netzbetreiber) stammen oder lokal im Windpark generiert sein (z. B. mittels einer Frequenzstatik).

Mittels des Sammelnetzes 21 wird die gesamte von den Windenergieanlagen 1 erzeugte elektrische Leistung gesammelt und über einen Haupttransformator 29 an ein Versorgungsnetz 9 abgegeben. Im Bereich des Transformators 29 wird die Spannung und Stromstärke der an das Versorgungsnetz 9 abgegebenen Leistung mittels entsprechender Spannungs- und Stromsensoren 27, 28 erfasst und als Messgrößen an den Parkmaster 3 angelegt.

Der Parkmaster 3 umfasst unter anderem einen Leistungsregler 4. Dieser ist dazu ausgebildet, die von dem Windpark über den Haupttransformator 29 an das Versorgungsnetz 9 abgegebene Leistung zu regeln.

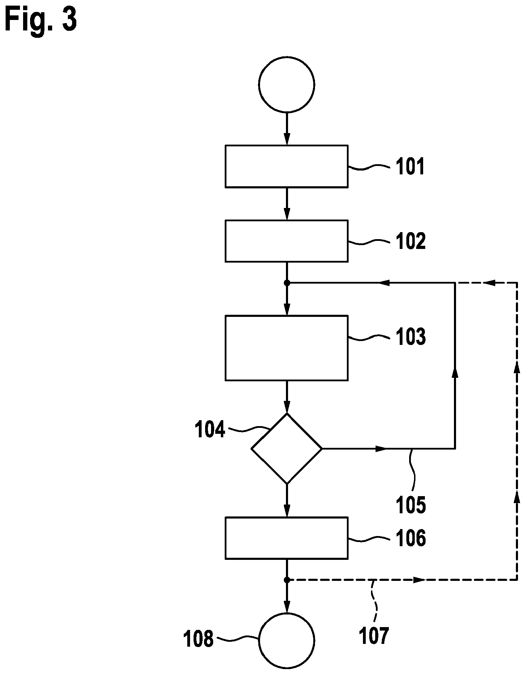

In einem Normalbetrieb erzeugen die Windenergieanlagen 1 so viel elektrische Leistung, wie bei den aktuellen Windbedingungen möglich ist, und speisen diese über den Haupttransformators 29 in das Versorgungsnetz 9 ein. Es kann aber auch ein leistungsreduzierter Betrieb angewählt werden, durch Vorgabe einer Leistungsreduktion seitens der übergeordneten Instanz an den Parkmaster 3. Der Parkmaster 3 erhält so einen Wert für eine vorzunehmende Leistungsreduktion $\Delta P_{soll,park}$ des Windparks insgesamt. Erfindungsgemäß ist der Leistungsregler 4 dazu ausgebildet, in diesem Fall neue Sollwerte für die Windenergieanlagen 1 zu bestimmen, und zwar derart, dass sie optimal auf die Leistungssteigerungsdynamik im Park abgestimmt sind. Zur näheren Erläuterung wird auf Figur 2, 3 verwiesen. Dazu ist eine Sollwertaufteilungseinheit 5 vorgesehen. Deren Eingangsgröße ist die vorzunehmende Leistungsreduktion $\Delta P_{soll,park}$ und sie gibt als Ausgangssignal einen daraus berechneten Signalvektor für individuelle Leistungssollwerte $P_{soll,i}$ der teilzunehmenden Windenergieanlagen.

Das erfindungsgemäße Verfahren sieht vor, dass jede Windenergieanlage einen Leistungssollwert $P_{soll,i}$ erhält, der sich aus ihrer aktuellen verfügbaren Leistung $P_{avail,i}$ abzüglich einem individuellen Reduktionsanteil $\Delta P_i$ zusammensetzt, wobei der Index für die laufende Nummer einer Windenergieanlage 1 im Windpark steht:

$$P_{soll,i} = P_{avail,i} - \Delta P_i$$

Für die Bestimmung der aktuell verfügbaren Leistung ist eine Determinationseinheit 7 vorgesehen. Sie ist dazu ausgebildet, anhand von in der Regel in dem Parkmaster 3 ohnehin vorhandenen Parametern (zum Beispiel lokale Windgeschwindigkeit an der jeweiligen Windenergieanlage 1) für jede Windenergieanlage 1 die verfügbare Leistung $P_{avail,i}$ zu berechnen. Alternativ kann die Determinationseinheit auch verteilt auf der jeweiligen Windenergieanlage verortet sein und das Ergebnis der Berechnung dem Parkmaster über das Signalnetz übermittelt werden. Die Gesamtheit dieser Werte für die Windenergieanlagen 1 des Windparks wird als ein Vektor $P_{avail,i}$ ausgegeben und an einen positiven Eingang eines Differenzglieds 65 angelegt.

Die Bestimmung der Reduktionsanteile $\Delta P_i$ individuell für die jeweilige Windenergieanlage 1 erfolgt mittels einer Berechnungseinheit 6. Hierbei wirkt die Berechnungseinheit 6 mit einer Optimiereinheit 8 mit einer darin implementierten Optimierungsbedingungs-Einheit 80 derart zusammen, dass eine Optimierung vorzugsweise unter Berücksichtigung von zwei Nebenbedingungen erfolgt.

Als Optimierungsbedingung 80 ist in der Optimiereinheit 8 implementiert, dass die von jeder der Windenergieanlagen 1 benötigte Zeitdauer zum Steigern der Leistungsabgabe von dem reduzierten Betrieb auf die maximal mögliche verfügbare Leistung gleich ist. Benennt man die von einer Windenergieanlage i benötigte Zeit, um ihre Leistungsabgabe von dem reduzierten Betrieb wieder auf die maximal mögliche verfügbare Leistung zu steigern, als $T_{re\text{-}gain,i}(\Delta P_i, x_i)$, dann gilt für die Optimierungsbedingungs-Einheit 80:

$$T_{regain,i}\left(\Delta P_i, x_i\right) = T_{regain,opt} \;\; \forall i$$

Hierbei ist die Zeit $T_{regain,i}(\Delta P, x_i)$ ein Maß für die Leistungssteigerungsdynamik der Anlage. Sie hängt von der Tiefe der geplanten Reduktion und gegebenenfalls von weiteren internen Zuständen der Windenergieanlage ab. Diese Zustände $x_i$ können insbesondere die lokal an der Windenergieanlage 1 wirkende Windgeschwindigkeit oder die verfügbare Leistung der Windenergieanlage 1 umfassen.

Zweckmäßigerweise ist in der Optimierungsbedingungs-Einheit 80 die Funktion $T_{regain,i}(\Delta P, x_i)$ als Kennfeld oder Polynom hinterlegt. Wegen der häufig nichtlinearen Eigenschaft von $T_{regain,i}(\Delta P, x_i)$ ist zur Berechnung der $\Delta P_i$ nach den vorstehend genannten Formen im allgemeinen eine iterative Optimierung erforderlich, welche von der Optimierungseinheit 8 durchgeführt wird.

Dies geschieht unter Berücksichtigung der beiden Nebenbedingungen, die in einer ersten und zweiten Nebenbedingungs-Einheit 81, 82 implementiert sind. Hierbei ist in der ersten Nebenbedingungs-Einheit 81 implementiert, dass die Summe aller $\Delta P_i$ Reduktionsanteile der Windenergieanlagen 1 der gewünschten Reduktion des Parks insgesamt entspricht:

$$\sum \Delta P_i = \Delta P_{soll,park}.$$

In der zweiten Nebenbedingungs-Einheit 82 ist als Nebenbedingung implementiert, dass jeder der Windenergieanlagen 1 trotz der Reduktion um $\Delta P_i$ noch oberhalb einer vorgebbaren absoluten Mindestwirkleistung betrieben wird.

Die von der Optimierungseinheit 8 in Kombination mit der Berechnungseinheit 6 berechneten Werte für die Reduktionsanteile $\Delta P_i$ der einzelnen Windenergieanlagen 1 wird als Ausgangsvektor 64 von der Berechnungseinheit 6 ausgegeben und an einen negativen Eingang des Differenzglied 65 angelegt. Das Differenzglied 65 berechnet daraus dann Leistungssollwerte $P_{soll,i}$ wie vorstehend angegeben und gibt sie als Signalvektor 66 aus. Diese werden vom Parkmaster 3 über das Signalnetz 22 an die jeweiligen Windenergieanlagen 1 angelegt.

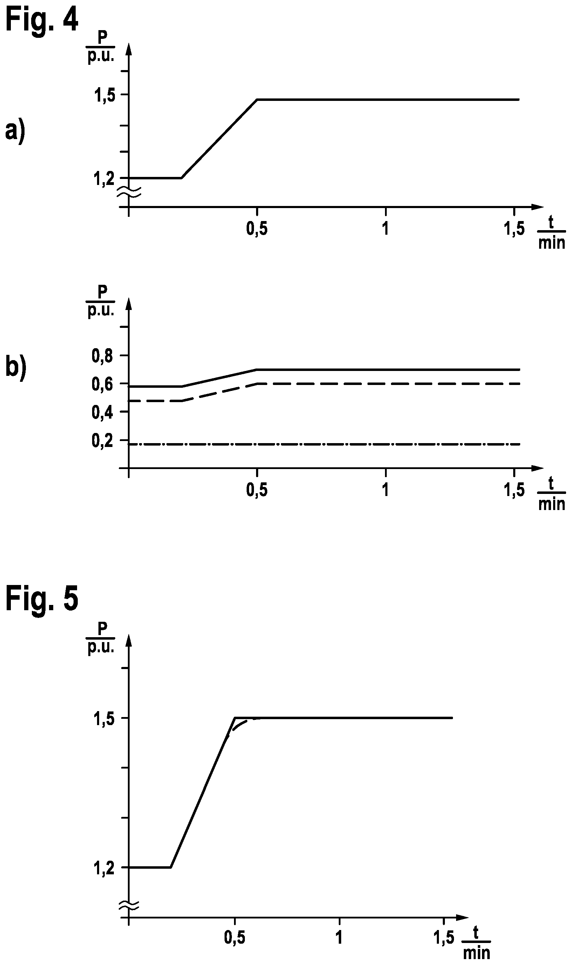

Die Durchführung und das Ergebnis werden anhand der Figuren 3 und 4 erläutert.

Zu Beginn seien die Windenergieanlagen 1 (exemplarisch dargestellt sind drei Windenergieanlagen) ungedrosselt betrieben. Dabei geben zwei der Windenergieanlagen mit einer Nennleistung von bspw. 5 MW die volle durch den Wind verfügbare Leistung in Höhe von 3,5 MW bzw. 3 MW ab, während eine dritte kleinere Windenergieanlage mit einer Nennleistung von 3 MW wegen lokal ungünstigem Wind nur 1 MW abgibt (s. in Fig. 4 a, b, Zeitraum bis $t_0$). Insgesamt gibt der Park somit 7,5 MW ab (Schritt 101).

Zum Zeitpunkt $t_0$ tritt eine Drosselung in Kraft, und zwar auf 6 MW (Schritt 102). Damit ist ausgehend von 7,5 MW die Leistungsreduktion $\Delta P_{soll,park}$ = 1,5 MW. Es sind nun im Folgenden für jede der Windenergieanlagen 1 individuell neue Leistungssollwerte $\Delta P_i$ zu bestimmen. Dies geschieht in Schritt 103. Es werden hierbei von der Optimierungs-Einheit 8 wie vorstehend beschrieben unter Berücksichtigung der Nebenbedingungen, wie sie in den Einheiten 81, 82 implementiert sind, Reduktionsanteile individuell für die Windenergieanlagen 1 berechnet, unter der Prämisse einer gleichen Steigerungszeit. Es ergeben sich für die drei Windenergieanlagen somit gedrosselte Leistungswerte von 2,8 bzw. 2,45 bzw. 0,75 MW, wie in Figur 4 b) im Zeitbereich (von $t_0$ bis $t_1$) dargestellt. Damit beträgt die Gesamtleistung des Windparks im gedrosselten Betrieb 6 MW, wie in Fig. 4a zum Zeitpunkt $t_1$ dargestellt ist. Die Unterschiedlichkeit der gedrosselten Leistungswerte rührt aus der Optimierungsbedingung her, welche einen Gleichgang der für die Leistungssteigerung nach Aufhebung der Drosselung benötigten Zeit anstrebt. Die Reduktion ist hierbei so eingestellt, dass nach Aufhebung der Drosselung dann alle Windenergieanlagen 1 zur gleichen Zeit wieder ihren Maximalwert erreichen werden.

Zum Zeitpunkt t = 1,2 min wird diese Drosselung aufgehoben (Schritt 102) und die Windenergieanlagen 1 erhöhen jeweils ihre Leistung, und zwar derart, dass die gesamte Leistung des Windparks wieder auf die ursprüngliche Leistung von 7,5 MW ansteigt.

Hierbei steigt die Wirkleistungsangabe von jeder der Windenergieanlagen 1 fortlaufend an (siehe Zeitbereich von 1,2 bis 1,5 min in Figur 4b), und die Gesamt-Leistungsabgabe des Windparks insgesamt steigt entsprechend (siehe Figur 4a). Man erkennt, dass bei den Windenergieanlagen der Leistungsanstieg zwar verschieden steil erfolgt, aber bei allen teilzunehmenden Windenergieanlagen 1 gleich lang dauert. Dies rührt aus der oben genannten Optimierungsbedingung. Damit wird der gewünschte Effekt erreicht, dass schließlich all teilzunehmenden Windenergieanlagen 1 zum selben Zeitpunkt (hier: t = 1,5 min) wieder ihren ungedrosselten Maximalwert erreichen. Damit erreicht auch der Park mit konstant steigender Leistung in kürzester Zeit seinen Maximalwert wieder. Man erkennt dies gut in Figur 4 a, wo die Gesamtleistungsabgabe des Windparks zügig wieder ohne Überschwinger oder ohne asymptotisches Kriech-Verhalten wieder an den ursprünglichen Wert für die Leistungsabgabe anknüpft. Dies geschieht zügig und genau.

Die Optimierung muss hierbei nicht vollständig durchgeführt werden in Schritt 103. Es kann auch genügen, die Optimierung über einer einstellbaren Dauer durchzuführen. Dies ist in der Abfrage 104 implementiert. Hierbei wird eine Anzahl von Optimierungsschritten oder ein vorgebbares Konvergenzkriterium geprüft. Ist das Konvergenzkriterium noch nicht erfolgt, so wird in das Optimierungsverfahren zurück verzweigt (Schritt 105). Ist das Konvergenzkriterium erfüllt (eine bestimmte Anzahl von Optimierungsschritten ist erreicht oder die Konvergenz ist besser als ein vorgebbares Grenzmaß), so werden in Schritt 106 die neuen Werte für die Leistungsabgabe vom Parkmaster 3 an die Windenergieanlagen 1 übermittelt, und die Windenergieanlagen 1 werden entsprechend betrieben. Gegebenenfalls wird dann in einem nächsten Schritt 107 (in einem neuen Rechenzyklus) das Optimierungsverfahren fortgesetzt, aufbauend auf den im vorhergehenden Schritt erreichten Ergebnissen. Damit kann eine schnelle Berechnung verknüpft werden mit einer (längerfristig) garantierten Konvergenz. Alternativ kann das Optimierungsverfahren auch beendet werden (Schritt 108).

Ein Vergleich mit einer Lösung nach dem Stand der Technik ist in Figur 5 dargestellt. Dort ist die Gesamtleistungsabgabe des Windparks über der Zeit dargestellt in einer Weise ähnlich der in Figur 4a. Der Verlauf gemäß der Erfindung ist mit durchgezogener Linie, der gemäß dem Stand der Technik ist (soweit abweichend) mit gepunkteter Linie dargestellt. Man erkennt, dass nach Ende der Drosselung bei dem Wiederreichen des Werts für den ungedrosselten Betrieb es im Stand der Technik zu einer Verzögerung kommt, ähnlich einer asymptotischen (Kriech-)Annäherung. Dies wird erfindungsgemäß verhindert, sodass der Anstieg schneller und gleichmäßiger erfolgt, und weder Kriechverhalten noch Überschwinger kennt. Der erfindungsgemäß betriebene Windpark erreicht somit zügiger und gleichmäßiger den ungedrosselten Wert. Dies ist für die Regelbarkeit des Windparks im Ganzen ein erheblicher Vorteil.

**Patentansprüche**

1. Verfahren zum Betreiben eines Windparks, der einen Parkmaster (3) und mehrere Windenergieanlagen (1) mit je einer Steuerung (15) umfasst zur Erzeugung elektrischer Leistung,
wobei der Parkmaster die Leistungsabgabe der Windenergieanlagen vorgibt, und der Windpark in einem Normalbetrieb und einem leistungsreduzierten Drosselbetrieb betrieben werden kann, wobei im Drosselbetrieb am Parkmaster ein Signal für eine Leistungsreduktion des Windparks $\Delta P_{soll,Park}$ angelegt wird und auf dieser Basis teilnehmende Windenergieanlagen ihre Leistungserzeugung drosseln, **gekennzeichnet durch**
Festlegen einer individuellen Soll-Leistungsreduktion $P_{soll,i}$ für jede teilnehmende Windenergieanlage mit den Schritten:

   Bestimmen einer verfügbaren Leistung $P_{avail(i)}$ für jede der teilnehmenden Windenergieanlagen und Verringern dieser verfügbaren Leistung um einen Reduktionsanteil $\Delta P_i$;
   Bestimmen der Reduktionsanteile $\Delta P_i$ durch ein Optimierungsverfahren mit der Optimierungsbedingung gleicher Steigerungszeit $T_{regain, opt} = T_{regain, i}$ für alle teilnehmenden Windenergieanlagen; und
   Wiederholen bis das Optimierungsverfahren ein voreinstellbares Abbruchkriterium erreicht.

2. Verfahren nach Anspruch 1, **gekennzeichnet durch** unvollständiges Durchführen des Optimierungsverfahrens, und zwar vorzugsweise über eine festgelegte Dauer.

3. Verfahren nach Anspruch 2, **dadurch gekennzeichnet, dass** die Dauer eine Zeitdauer ist.

4. Verfahren nach Anspruch 2, **dadurch gekennzeichnet, dass** die Dauer eine Anzahl von Wiederholungen ist.

5. Verfahren nach einem der Ansprüche 2 bis 4, **dadurch gekennzeichnet, dass** das Optimierungsverfahren inkrementell durchgeführt wird, ausgehend von dem Ergebnis des davor zuletzt durchgeführten.

6. Verfahren nach einem der Ansprüche 2 bis 5, **gekennzeichnet durch** Erzwingen einer Nebenbedingung auch bei unvollständiger Optimierung, wobei vorzugsweise eine Summe der Reduktionsanteile $\Delta P_i$ berücksichtigt wird, und zwar weiter vorzugsweise so, dass $\sum \Delta P_i = \Delta P_{soll,Park}$ ist.

7. Verfahren nach Anspruch 6, **dadurch gekennzeichnet, dass** das Erzwingen durch einen Korrekturfaktor durchgeführt wird.

8. Verfahren nach einem der vorangehenden Ansprüche, **gekennzeichnet durch** Einbeziehen einer einzuhaltenden Mindestleistung jeder teilnehmenden Windenergieanlagen als weitere Nebenbedingung.

9. Verfahren nach einem der vorangehenden Ansprüche, **gekennzeichnet durch** Ausschließen eines Teils der Windenergieanlagen, insbesondere solcher mit einer verfügbaren Leistung unterhalb einer einstellbaren Schwelle.

10. Verfahren nach einem der vorangehenden Ansprüche, **gekennzeichnet durch** Hinterlegen einer Funktion für die Steigerungszeit der teilnehmenden Windenergieanlagen als Polynom.

11. Verfahren nach einem der Ansprüche 1 bis 10, **gekennzeichnet durch** Hinterlegen einer Funktion für die Steigerungszeit als mehrdimensionales Kennfeld.

12. Verfahren nach einem der Ansprüche 1 bis 11, **gekennzeichnet durch** lokales Berechnen der Steigerungszeit auf den teilzunehmenden Windenergieanlagen individuell und Übertragen des Ergebnisses an eine zentrale Einheit zur Ausführung des Optimierungsverfahrens.

13. Verfahren nach einem der vorangehenden Ansprüche, **gekennzeichnet durch** zumindest teilweises dezentrales Ausführen des Optimierungsverfahrens.

14. Windpark, der einen Parkmaster (3) und mehrere Windenergieanlagen (1) mit je einer Steuerung (15) umfasst zur Erzeugung elektrischer Leistung umfasst, wobei der Parkmaster (3) die Leistungsabgabe der Windenergieanlagen (1) vorgibt, und der Windpark in einem Normalbetrieb und einem leistungsreduzierten Drosselbetrieb betreibbar ist, wobei im Drosselbetrieb am Parkmaster (3) ein Signal für eine Leistungsreduktion des Windparks ($\Delta P_{soll,Park}$) angelegt ist und der Parkmaster (3) auf dieser Basis Drosselsignale an teilnehmende Windenergieanlagen (1) ausgibt, **dadurch gekennzeichnet, dass** der Parkmaster (3) weiter dazu ausgebildet ist, eine individuelle Soll-Leistungsreduktion $P_{soll(i)}$ für jede teilnehmende Windenergieanlage (1) festzulegen mit den Schritten Bestimmen einer verfügbaren Leistung $P_{avail(i)}$ für jede der teilnehmenden Windenergieanlagen (1) und Verringern dieser verfügbaren Leistung um einen Reduktionsanteil $\Delta P_i$; Bestimmen der Reduktionsanteile $\Delta P_i$ durch ein Optimierungsverfahren mit der Optimierungsbedingung gleichen Steigerungszeit $T_{regain,\ opt} = T_{regain,\ i}$ für alle teilnehmenden Windenergieanlagen; und Wiederholen bis das Optimierungsverfahren ein voreinstellbares Abbruchkriterium erreicht.

15. Windpark nach Anspruch 14, **dadurch gekennzeichnet, dass** der Parkmaster (3) ferner zur Ausführung des Verfahrens nach einem der Ansprüche 2 bis 13 ausgebildet ist.

**Claims**

1. Method for operating a wind farm which comprises a farm master (3) and a plurality of wind power plants (1), each with a controller (15), for generating electrical power, where the farm master prespecifies the power output of the wind power plants, and the wind farm can be operated in a normal mode and a reduced-power throttle mode, where, in the throttle mode, a signal for a power reduction of the wind farm $\Delta P_{set,farm}$ is applied to the farm master and participating wind power plants throttle their power generation on this basis, **characterized by** defining an individual setpoint power reduction $P_{set,i}$ for each participating wind power plant, comprising the steps of:

   determining an available power $P_{avail(i)}$ for each of the participating wind power plants and reducing this available power by a reduction proportion $\Delta P_i$;
   determining the reduction proportions $\Delta P_i$ using an optimization method with the optimization condition of equal increase time $T_{regain,\ opt} = T_{regain,\ i}$ for all participating wind power plants; and
   repeating until the optimization method reaches a presettable termination criterion.

2. Method according to Claim 1, **characterized by** executing the optimization method incompletely, specifically preferably over a fixed period.

3. Method according to Claim 2, **characterized in that** the period is a time period.

4. Method according to Claim 2, **characterized in that** the period is a number of repetitions.

5. Method according to one of Claims 2 to 4, **characterized in that** the optimization method is executed incrementally, starting from the result of the optimization method which was executed last.

6. Method according to one of Claims 2 to 5, **characterized by** enforcing a secondary condition even in the case of incomplete optimization, where a sum of the reduction proportions $\Delta P_i$ is preferably taken into account, specifically further preferably such that $\sum \Delta P_i = \Delta P_{set,farm}$.

7. Method according to Claim 6, **characterized in that** the enforcement is executed by a correction factor.

8. Method according to one of the preceding claims, **characterized by** including a minimum power, which is to be met, of each participating wind power plant as a further secondary condition.

9. Method according to one of the preceding claims, **characterized by** excluding some of the wind power plants, in particular those with available power below a settable threshold.

10. Method according to one of the preceding claims, **characterized by** storing a function for the increase time of the participating wind power plants as a polynomial.

11. Method according to one of Claims 1 to 10, **characterized by** storing a function for the increase time as a multidimensional characteristic map.

12. Method according to one of Claims 1 to 11, **characterized by** locally calculating the increase time at the participating wind power plants individually and transmitting the result to a central unit for executing the optimization method.

13. Method according to one of the preceding claims, **characterized by** at least partial decentralized execution of the optimization method.

14. Wind farm which comprises a farm master (3) and a plurality of wind power plants (1), each with a controller (15), for generating electrical power, where the farm master (3) prespecifies the power output of the wind power plants (1), and the wind farm can be operated in a normal mode and a reduced-power throttle mode, where, in the throttle mode, a signal for a power reduction of the wind farm ($\Delta P_{set,farm}$) is

applied to the farm master (3) and the farm master (3) outputs throttle signals to participating wind power plants (1) on this basis, **characterized in that** the farm master (3) is further designed to define an individual setpoint power reduction $P_{set(i)}$ for each participating wind power plant (1), comprising the steps of

determining an available power $P_{avail(i)}$ for each of the participating wind power plants (1) and reducing this available power by a reduction proportion $\Delta P_i$;

determining the reduction proportions $\Delta P_i$ using an optimization method with the optimization condition of identical increase time $T_{regain, opt} = T_{regain, i}$ for all participating wind power plants; and

repeating until the optimization method reaches a presettable termination criterion.

15. Wind farm according to Claim 14, **characterized in that** the farm master (3) is further designed to execute the method according to one of Claims 2 to 13.

**Revendications**

1. Procédé de gestion d'un parc éolien qui comporte un gestionnaire de parc (3) et plusieurs éoliennes (1) qui présentent chacune une commande (15), pour la production d'énergie électrique, le gestionnaire de parc prescrivant la puissance délivrée par les éoliennes, le parc éolien pouvant être conduit en fonctionnement normal et en fonctionnement restreint à puissance réduite, un signal $DP_{soll,Park}$ de réduction de la puissance du parc éolien étant appliqué en fonctionnement restreint sur le gestionnaire de parc, les éoliennes participantes restreignant sur cette base leur production d'énergie,
**caractérisé par**
la définition d'une réduction individuelle de puissance de consigne $P_{soll,i}$ pour chaque éolienne participante, par les étapes suivantes :

détermination de la puissance disponible $P_{avail(i)}$ pour chaque éolienne participante et diminution de cette puissance disponible d'un facteur de réduction $DP_i$,
détermination des facteurs de réduction $DP_i$ par un processus d'optimisation avec comme condition d'optimisation une même durée de remontée $T_{regain, opt} = T_{regain, i}$ pour toutes les éoliennes participantes et
répétition jusqu'à ce que le processus d'optimisation satisfasse à un critère d'interruption préréglable.

2. Procédé selon la revendication 1, **caractérisé par** l'exécution incomplète du processus d'optimisation, de préférence pendant une durée définie.

3. Procédé selon la revendication 2, **caractérisé en ce que** la durée est une durée temporelle.

4. Procédé selon la revendication 2, **caractérisé en ce que** la durée est un nombre de répétitions.

5. Procédé selon l'une des revendications 2 à 4, **caractérisé en ce que** le processus d'optimisation est exécuté de manière incrémentielle en partant du résultat de celui exécuté en dernier.

6. Procédé selon l'une des revendications 2 à 5, **caractérisé par** l'imposition d'une condition secondaire même en cas d'optimisation incomplète, la somme des facteurs de réduction $DP_i$ étant de préférence prise en compte et de manière plus préférable de telle sorte que S $DP_i = DP_{soll,Park}$.

7. Procédé selon la revendication 6, **caractérisé en ce que** l'imposition est exécutée par un facteur de correction.

8. Procédé selon l'une des revendications précédentes, **caractérisé par** la prise en compte d'une puissance minimale à respecter comme autre condition secondaire par chaque éolienne participante.

9. Procédé selon l'une des revendications précédentes, **caractérisé par** l'exclusion d'une partie des éoliennes, en particulier de celles dont la puissance disponible est située en dessous d'un seuil réglable.

10. Procédé selon l'une des revendications précédentes, **caractérisé par** la conservation d'une fonction de la durée de remontée des éoliennes participantes sous la forme d'un polynôme.

11. Procédé selon l'une des revendications 1 à 10, **caractérisé par** la conservation d'une fonction de la durée de remontée sous la forme d'un champ de caractéristiques à plusieurs dimensions.

12. Procédé selon l'une des revendications 1 à 11, **caractérisé par** le calcul local de la durée de remontée individuellement pour chaque éolienne participante et le transfert du résultat à une unité centrale en vue de l'exécution du processus d'optimisation.

13. Procédé selon l'une des revendications précédentes, **caractérisé par** l'exécution au moins en partie décentralisée du processus d'optimisation.

14. Parc éolien qui comporte un gestionnaire de parc (3) et plusieurs éoliennes (1) qui présentent chacune une commande (15), pour la production d'énergie électrique, le gestionnaire de parc (3) prescrivant la puissance délivrée par les éoliennes (1), le parc éolien pouvant être conduit en fonctionnement normal et en fonctionnement restreint à puissance réduite, un signal ($DP_{soll,Park}$) de réduction de la puissance du parc éolien étant appliqué en fonctionnement restreint sur le gestionnaire de parc (3), le gestionnaire de parc (3) délivrant sur cette base des signaux de restriction aux éoliennes (1) participantes, **caractérisé en ce que**

le gestionnaire de parc (3) est en outre configuré pour définir une réduction individuelle de puissance de consigne $P_{soll(i)}$ pour chaque éolienne participante (1), par les étapes suivantes :

détermination de la puissance disponible $P_{avail(i)}$ pour chaque éolienne (1) participante et diminution de cette puissance disponible d'un facteur de réduction $DP_i$ ;

détermination des facteurs de réduction $DP_i$ par un processus d'optimisation avec comme condition d'optimisation une même durée de remontée $T_{regain, opt} = T_{regain, i}$ pour toutes les éoliennes participantes ; et

répétition jusqu'à ce que le processus d'optimisation satisfasse à un critère d'interruption préréglable.

15. Parc éolien selon la revendication 14, **caractérisé en ce que** le gestionnaire de parc (3) est en outre configuré pour exécuter le procédé selon l'une des revendications 2 à 13.

# Fig. 1

# Fig. 2

# Fig. 3

## Fig. 4

a)

b)

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2028368 B1
- US 20110175353 A